# EUROPÄISCHE PATENTANMELDUNG

(11) **EP 1 408 342 A2**
(43) Veröffentlichungstag der Anmeldung: **14.04.2004**
(21) Anmeldenummer: 03022887.8
(22) Anmeldetag: 08.10.2003
(51) Int. Cl.: G01S 3/782

(54) **Verfahren und Vorrichtung zum Bestimmen der Position eines Objektes mit optischen Mitteln**

(30) Priorität: 08.10.2002 DE 10246808
(71) Anmelder: Abatec-Electronic AG, 4844 Regau (AT)
(72) Erfinder: Niederndorfer, Friedrich, Dipl. Ing., 4840 Pilsbach (AT); Weinberger, Franz, Ing., 4713 Gallspach (AT); Schachtner, Hannes, Dipl.-Ing., 4840 Vöcklabruck (AT)
(74) Vertreter: Jacoby, Georg

(57) **Zusammenfassung**

Die Erfindung betrifft eine Vorrichtung zum quasikontinuierlichen Bestimmen der Position eines Objektes (RP) im Raum. Sie umfaßt ein am Objekt (RP) angebrachtes Leuchtmittel zum Aussenden von Licht in den Raum. Sie umfaßt ferner einen ersten Lichtdetektor (E1) zum Messen eines ersten Winkels (α₁), unter dem das vom Leuchtmittel ausgestrahlte Licht auf den ersten Lichtdetektor (E1) einfällt, einen zweiten Lichtdetektor (E1) zum Messen eines zweiten Winkels (e₁), unter dem das vom Leuchtmittel ausgestrahlte Licht auf den zweiten Lichtdetektor (E1) einfällt, und einen dritten Lichtdetektor (E2) zum Messen eines dritten Winkels (α₂), unter dem das vom Leuchtmittel ausgestrahlte Licht auf den dritten Lichtdetektor (E2) einfällt, wobei der dritte Lichtdetektor (E2) an einer unterschiedlichen Position als der erste und/oder der zweite Lichtdetektor (E1) angeordnet ist. Schließlich umfaßt sie eine mit dem ersten, zweiten und dritten Lichtdetektor (E1,E2) gekoppelte Auswerteeinrichtung zum Bestimmen der Position des Objektes (RP) im Raum anhand des ersten, zweiten und dritten gemessenen Winkels (α₁,e₁,α₂). Die Erfindung betrifft ferner ein entsprechendes Verfahren.

## Beschreibung

Die Erfindung betrifft Verfahren und Vorrichtungen zum Bestimmen der Position eines Objektes im Raum.

Oftmals ist es wünschenswert, die Flugbahn oder genaue Bewegung eines Objektes analysieren zu können. Beispielsweise werden im Sportbereich Analysen von Bewegungsabläufen, insbesondere unter Einsatz modernster Technik, immer stärker nachgefragt. So finden heutzutage bereits im großen Maße Videoanalysen statt, bei denen der zu analysierende Schlag eines Tennis- oder Golfspielers auf Band aufgezeichnet und anschließend von einem Sportkundigen durch Abspielen des Bandes in Zeitlupe analysiert wird. Aufgrund der zweidimensionalen Aufzeichnung eines in drei Dimensionen stattfindenden Bewegungsablaufs ist es schwierig, genaue Analysen zu erstellen.

So sind aus dem Stand der Technik bereits einige Verfahren und Vorrichtungen bekannt, mit denen die Position eines Objektes im Raum bestimmt werden kann. Die Druckschrift EP 0 704 715 A1 zeigt beispielsweise ein portables System für die Bestimmung der Anfangsflugbahn eines Golfballes, Basketballes, Fußballes, etc. Hierzu sind auf dem Objekt mehrere reflektierende oder kontrastreiche Flächenmarkierungen aufgebracht. Diese Flächenmarkierungen werden von einer oder zwei Kameras aufgenommen, in dem eine Kamerablende synchron mit dem Aussenden eines Blitzlichtes geöffnet wird. Somit zeichnet die Kamera ein Lichtmuster aller sichtbaren Flächenmarkierungen in Form von Momentaufnahmen auf. Die Position des Golfballes wird anschließend aus den erhaltenen zweidimensionalen Kameradaten über eine Stereobildauswertung bestimmt.

Aus der DE 100 54 282 ist es ferner bekannt, mehrere optische Signalgeber am Objekt zu befestigen, die Lichtsignale aussenden. Die Lichtsignale werden auf einen zweidimensional auflösenden Detektor projiziert und dort in zweidimensionale Lagekoordinaten umgewandelt. Aus den zweidimensionalen Lagekoordinaten der den einzelnen Signalgebern zugeordneten Lichtpunkte zueinander wird anschließend die Position des Objektes im Raum bestimmt, wobei hierzu die relative Lage der am Objekt angeordneten Signalgeber zueinander bekannt sein muß.

Es hat sich jedoch herausgestellt, daß bei den bekannten Verfahren und Vorrichtungen (insbesondere bei der Stereobildauswertung) Unmengen an Daten anfallen, was einer Echtzeitverarbeitung und damit quasi-kontinuierlichen Positionsbestimmung hinderlich ist.

Der Erfindung liegt nunmehr die Aufgabe zugrunde, die bekannten Verfahren und Vorrichtungen zur Positionsbestimmung dahingehend weiterzuentwickeln, daß die Position mit Hilfe einer reduzierten Datenmenge bzw. Rechenaufwand ermittelt werden kann und somit eine Echtzeitpositionsbestimmung ermöglicht wird.

Die Erfindung löst diese Aufgabe jeweils mit den Gegenständen der Ansprüche 1, 2, 11 und 12. Bevorzugte Ausführungsbeispiele sind in den Unteransprüchen beschrieben.

Nach Anspruch 1 ist ein Verfahren zum quasi-kontinuierlichen Bestimmen der Position eines Objektes im Raum geschaffen, bei dem vom Objekt Licht ausgestrahlt wird. Von einem ersten Lichtdetektor wird ein erster Winkel gemessen, unter dem das vom Objekt ausgestrahlte Licht auf den ersten Lichtdetektor einfällt. Ebenso wird von einem zweiten Lichtdetektor ein zweiter Winkel gemessen, unter dem das vom Objekt ausgestrahlte Licht auf den zweiten Lichtdetektor einfällt, wobei der erste Winkel senkrecht zum zweiten Winkel ist. Schließlich wird auch noch von einem dritten Lichtdetektor ein dritter Winkel gemessen, unter dem das vom Objekt ausgestrahlte Licht auf den dritten Lichtdetektor einfällt, wobei der dritte Lichtdetektor an einer unterschiedlichen Position als der zweite und/oder der erste Lichtdetektor angeordnet ist. Die Position des Objektes im Raum wird aus dem ersten, zweiten und dritten gemessenen Winkel sowie der Position des ersten, zweiten und dritten Lichtdetektors bestimmt.

Nach Anspruch 2 ist ein Verfahren zum quasi-kontinuierlichen Bestimmen der Position eines Objektes im Raum geschaffen, bei dem vom Objekt Licht ausgestrahlt wird. Von einem ersten Lichtdetektor wird ein erster Winkel gemessen, unter dem das vom Objekt ausgestrahlte Licht auf den ersten Lichtdetektor einfällt. Ebenso wird von einem zweiten Lichtdetektor ein zweiter Winkel gemessen, unter dem das vom Objekt ausgestrahlte Licht auf den zweiten Lichtdetektor einfällt, wobei der erste Winkel senkrecht zum zweiten Winkel ist. Schließlich wird von einer Entfernungsmeßeinrichtung eine Entfernung zum Objekt gemessen. Die Position des Objektes im Raum wird aus dem ersten und zweiten gemessenen Winkel und der gemessenen Entfernung sowie der Position des ersten und zweiten Lichtdetektors und der Entfernungsmeßeinrichtung bestimmt.

Nach den Ansprüchen 11 und 12 sind den Verfahren gemäß der Ansprüche 1 und 2 entsprechende Vorrichtungen zum quasi-kontinuierlichen Bestimmen der Position eines Objektes geschaffen.

Weitere Vorteile und Merkmale der vorliegenden Erfindung werden nunmehr anhand bevorzugter Ausführungsbeispiele mit Bezug auf die beigefügte Zeichnung näher erläutert, in der:
- Fig. 1a, b: schematische Darstellungen zweier unterschiedlicher bevorzugter Ausführungsbeispiele der erfindungsgemäßen Vorrichtung zum Bestimmen der Position eines Objektes im Raum sind;
- Fig. 2: eine schematische Seitenansicht sowie Aufsicht auf einen bevorzugten Lichtdetektor der in Fig. 1a und b gezeigten erfindungsgemäßen Vorrichtungen ist;
- Fig. 3: ein Zeitablaufdiagramm für die von den bevorzugten Lichtdetektoren der erfindungsgemäßen Vorrichtungen gelieferten Signale zeigt;
- Fig. 4: eine schematische Seitenansicht einer bevorzugten Lichtdetektoreinheit der erfindungsgemäßen Vorrichtungen zeigt, die aus zwei separaten Lichtdetektoren aufgebaut ist;
- Fig. 5a-c: schematische Seitenansichten alternativer Ausführungsbeispiele für den in Fig. 2 gezeigten Lichtdetektor zeigen;
- Fig. 6: ein Zeitablaufdiagramm für die Signale zeigt, die vom in Fig. 5c dargestellten bevorzugten Ausführungsbeispiel des Lichtdetektors geliefert werden;
- Fig. 7: eine beispielhafte Anwendung der erfindungsgemäßen Vorrichtungen zur Bewegungsanalyse eines Golfschlages illustriert.

Gemäß einem ersten bevorzugten Ausführungsbeispiel umfaßt die erfindungsgemäße Vorrichtung zum quasi-kontinuierlichen Bestimmen der Position eines Objektes ein am Objekt angebrachtes Leuchtmittel zum Aussenden von Licht in den Raum. Dieses Licht fällt auf einen ersten Lichtdetektor, der einen ersten Winkel zwischen dem Ort des Lichtdetektors und dem Objekt mißt. Das Licht fällt ferner auf einen zweiten Lichtdetektor, der einen zweiten, senkrecht zum ersten stehenden Winkel zwischen dem Lichtdetektor und dem Objekt mißt. Schließlich fällt das Licht noch auf einen dritten Lichtdetektor, der einen dritten Winkel zwischen diesem Lichtdetektor und dem Objekt mißt. Dabei ist der dritte Lichtdetektor an einer anderen Position als der erste und der zweite Lichtdetektor angeordnet. Es sei an dieser Stelle bemerkt, daß auch der erste und der zweite Lichtdetektor an unterschiedlichen Positionen zueinander angeordnet werden können. Die Unterscheidung zwischen erstem, zweitem und drittem Lichtdetektor bedeutet nicht, daß dies zwei oder drei getrennte Detektoren sein müssen, sondern daß lediglich zwei getrennte Meßgröβen (erster Winkel, bevorzugt senkrecht dazu stehender zweiter Winkel und dritter Winkel) gemessen werden. Es wird jedoch bevorzugt, daß der dritte Lichtdetektor, wenn er räumlich vom ersten bzw. zweiten Lichtdetektor entfernt ist, ein getrennter Detektor ist. Selbstverständlich können auch alle drei Lichtdetektoren als separate Einheiten ausgebildet sein, die an unterschiedlichen Positionen angeordnet sind. Für die anschließende Bestimmung der Position des Objektes im Raum muß hierbei die relative Lage der drei Lichtdetektoren zueinander bekannt sein. Beispielsweise kann je einer der drei Lichtdetektoren auf je einer der drei Achsen eines kartesischen Koordinatensystems angeordnet sein. Die gemessenen Winkel der drei Lichtdetektoren können dann bevorzugt paarweise senkrecht zueinander stehen.

Die Positionsbestimmung wird von einer mit dem ersten, zweiten und dritten Lichtdetektor gekoppelten Auswerteeinrichtung durchgeführt, welche die Objektposition anhand des ersten, zweiten und dritten gemessenen Winkels sowie der Position des ersten, zweiten und dritten Lichtdetektors bestimmt. Die winkelauflösenden Detektoren können unterschiedlicher Art sein. Nachfolgend wird lediglich ein bevorzugtes Ausführungsbeispiel näher beschrieben, bei dem die Winkelauflösung mit Hilfe einer um ein Lichterfassungsmittel rotierenden Blende realisiert ist. Diese Blende kann eine mechanisch rotierende oder auch eine elektronisch rotierende Blende sein. Eine elektronische Blende kann eine in ihrer Lichtdurchlässigkeit gesteuerte LCD-Schicht sein, deren durchlässiger Bereich durch entsprechende Steuerung der Lichtdurchlässigkeit ihrer Pixel, Streifen oder dgl. um das Lichterfassungsmittel rotiert (falls die LCD-Schicht um das Lichterfassungsmittel gebogen angeordnet ist) oder vor diesem verschoben wird (falls die LCD-Schicht planar ist). Ebenso sind (beispielsweise holographisch hergestellte) Beugungsgitter vor einem ortsauflösenden Lichterfassungsmittel vorstellbar, welche einen auftreffenden Lichtstrahl je nach Winkellage auf einen unterschiedlichen Ortsbereich auf das Lichterfassungsmittel abbilden.

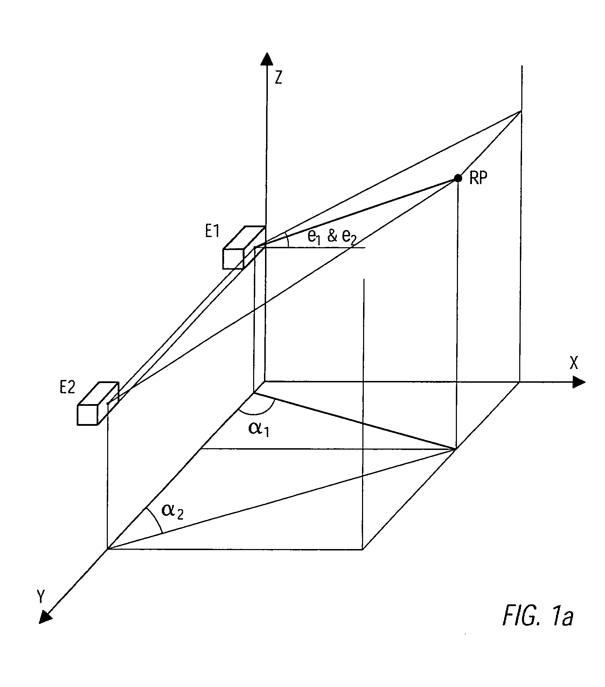

Fig. 1a zeigt die Verwendung zweier räumlich getrennter, in einer Ebene angeordneter Lichtdetektoreinheiten E1 und E2, die je einen Winkel α₁ und α₂ (Azimutwinkel) und einen senkrecht dazu stehenden Winkel e₁ und e₂ (Elevationswinkel) zu einem Objekt RP messen. Am Objekt RP kann eine Lichtquelle (Infrarot-LED, LED im sichtbaren Frequenzbereich, etc.) angebracht sein, welche das Licht in den gesamten Raum strahlt, so daß es auch in nahezu jeder beliebigen Position des Objektes RP und in jeder beliebigen Ausrichtung des Objektes RP auf die Lichtdetektoreinheiten E1 und E2 fällt. Anstelle der Lichtquelle kann am Objekt RP auch ein Reflektor angeordnet sein, der das Licht von einer oder mehreren Lichtquellen zurück zu den Lichtdetektoreinheiten E1 und E2 reflektiert. Die Lichtquellen können bevorzugt jeweils an den Lichtdetektoreinheiten E1 und E2 angeordnet sein. Hierzu ist der Reflektor bevorzugt als Retro-Reflektor ausgebildet, damit möglichst alles auf den Retro-Reflektor auftreffende Licht zurück zu den Lichtdetektoreinheiten E1 und E2 reflektiert wird.

Die Lichtdetektoreinheit E1 mißt also einen ersten Azimutwinkel α₁ und einen zweiten Elevationswinkel e₁ und liefert diese Winkelposition an eine in der Fig. 1a nicht dargestellte Auswerteeinrichtung. Diese Auswerteeinrichtung kann beispielsweise ein Single-Chip-Computer sein, auf dem ein entsprechendes Programm zur Bestimmung der Position des Objektes im Raum abläuft. Für weitere Einzelheiten zu der speziellen Implementierung einer solchen Auswerteeinrichtung wird auf das Durchschnittskönnen des Fachmanns verwiesen. Die Auswerteeinrichtung berechnet aus dem gemessenen ersten und zweiten Winkel α₁ und e₁ einen ersten Richtungsvektor, der durch die Position des Lichtdetektors E1 verläuft und zum Objekt RP zeigt. Ebenso mißt die Lichtdetektoreinheit E2 einen dritten Azimutwinkel α₂ und einen vierten Elevationswinkel e₂, der in dem in Fig. 1a gezeigten Ausführungsbeispiel gleich dem zweiten Elevationswinkel e₁ ist, da die beiden Lichtdetektoreinheiten E1 und E2 in gleicher Höhe bezüglich der z-Achse angeordnet sind. Die Auswerteeinrichtung berechnet nunmehr aus dem gemessenen dritten und vierten Winkel einen zweiten Richtungsvektor, der durch die Position des zweiten Lichtdetektors E2 verläuft und zum Objekt RP zeigt. Anschließend ermittelt die Auswerteeinrichtung den Schnittpunkt der beiden Richtungsvektoren und erhält damit die Position des Objektes RP im Raum.

Wie aus der Fig. 1a ersichtlich wird, ist die Information über den vierten gemessenen Elevationswinkel e₂ redundant, da dieser gleich groß mit dem zweiten Elevationswinkel e₁ ist. Diese Redundanz kann jedoch ausgenutzt werden, die Genauigkeit der Positionsbestimmung zu erhöhen, indem beispielsweise über beide gemessenen Elevationswinkel e₁ und e₂ gemittelt wird. Selbstverständlich gibt es weitere Möglichkeiten, die Genauigkeit der Positionsbestimmung mit Hilfe von redundanten Messungen zu erhöhen. Hierzu sei auf das Durchschnittskönnen des Fachmanns verwiesen. Alternativ kann die zweite Lichtdetektoreinheit E2 lediglich den dritten Azimutwinkel α₂ messen. Die Auswerteeinrichtung ermittelt dann auf der Basis dieses gemessenen Azimutwinkels α₂ und der Position der zweiten Lichtdetektoreinheit E2 eine (in der Fig. 1a senkrecht zur xy-Ebene stehende) Meßebene, in der das Objekt RP liegt. Anschlieβend ermittelt sie die Position des Objektes RP aus dem Schnittpunkt des ersten Richtungsvektors mit dieser Meßebene.

Wenn alle drei Lichtdetektoren an unterschiedlichen Positionen angeordnet sind (d.h., die erste Lichtdetektoreinheit E1 wird in zwei Lichtdetektoren getrennt, die bevorzugt zwei senkrecht zueinander stehende Winkel an unterschiedlichen Positionen im Raum messen), dann kann die Auswerteeinrichtung für jeden Lichtdetektor eine Meßebene bestimmen, welche durch die Position des jeweiligen Lichtdetektors und des gemessenen Winkels eindeutig festgelegt ist, und anschließend die Objektposition im Raum aus dem Schnittpunkt der drei Meßebenen ermitteln. Wie aus den beschriebenen Beispielen leicht ersichtlich wird, gibt es eine Vielzahl an Möglichkeiten, die Lichtdetektoren zueinander zu positionieren und deren gemessene Winkel zueinander auszurichten.

Selbstverständlich können auch weitere Lichtdetektoren oder Lichtdetektoreinheiten an unterschiedlichen Positionen vorgesehen werden. Mit mehreren Lichtdetektoreinheiten kann über die Messung redundanter Winkel die Genauigkeit der Positionsbestimmung erhöht werden. Es kann auch Abschattungsproblemen vorgebeugt werden und/oder das Meßraum, innerhalb dem die Position des Objektes bestimmt werden soll, vergrößert werden. Die redundant gemessenen Winkel können zur Positionsbestimmung statistisch ausgewertet werden. So können solche Messungen verworfen werden, die außerhalb eines bestimmten Positionsbereichs liegen, welcher durch die bestimmten Positionen von mehreren redundanten Messungen gegeben ist. Es können auch aus dem zeitlichen Verlauf der ermittelten Positionen Trajektorien bestimmt werden und solche Messungen verworfen werden, die nicht auf einer plausiblen Vorhersage des zukünftigen Trajektionsverlaufs liegen. Die mehreren Lichtdetektoreinheiten können über ein Netzwerk zusammengeschlossen werden (chaining), wobei beispielsweise ein Master die Einzelmessungen der Slaves auswertet.

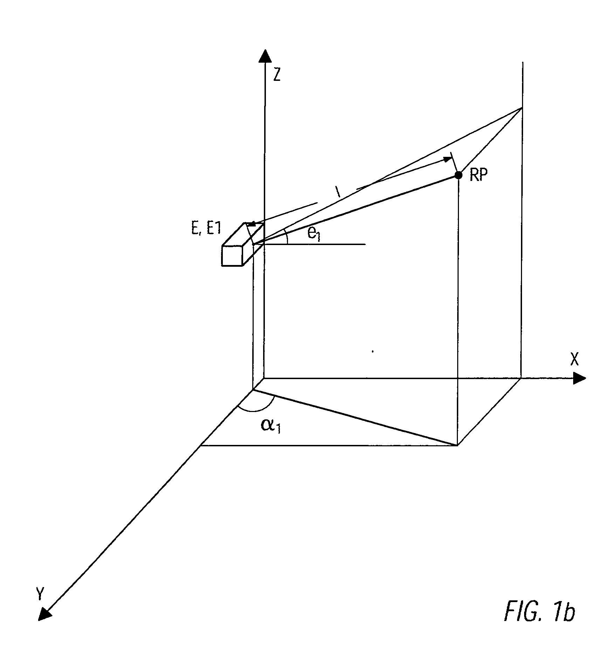

Fig. 1b zeigt ein zweites bevorzugtes Ausführungsbeispiel der erfindungsgemäßen Vorrichtung zum quasi-kontinuierlichen Bestimmen der Position eines Objektes, die ähnlich wie das erste Ausführungsbeispiel aufgebaut ist. Im Unterschied zum letzteren umfaßt sie lediglich zwei Lichtdetektoren, die bevorzugt an einer Position angeordnet sind eine Lichtdetektoreinheit bilden. Diese Lichtdetektoreinheit mißt einen ersten Azimutwinkel α₁ und einen zweiten Elevationswinkel e₁ und liefert diese Winkelposition wiederum an eine in der Fig. 1b nicht dargestellte Auswerteeinrichtung. Darüber hinaus umfaßt die Lichtdetektoreinheit noch einen Entfernungsmesser, der die Entfernung 1 des Objektes RP von der Lichtdetektoreinheit mißt. Dieser Entfernungsmesser kann ein Laser-, ein Ultraschallsender oder dgl. sein. Die Auswerteeinrichtung berechnet aus dem gemessenen ersten und zweiten Winkel α₁ und e₁ einen ersten Richtungsvektor, der durch die Position des Lichtdetektors E1 verläuft und zum Objekt RP zeigt. Aus der gemessenen Entfernung kann sie dann mit dem bestimmten Richtungsvektor unmittelbar die Position des Objektes RP im Raum bestimmen.

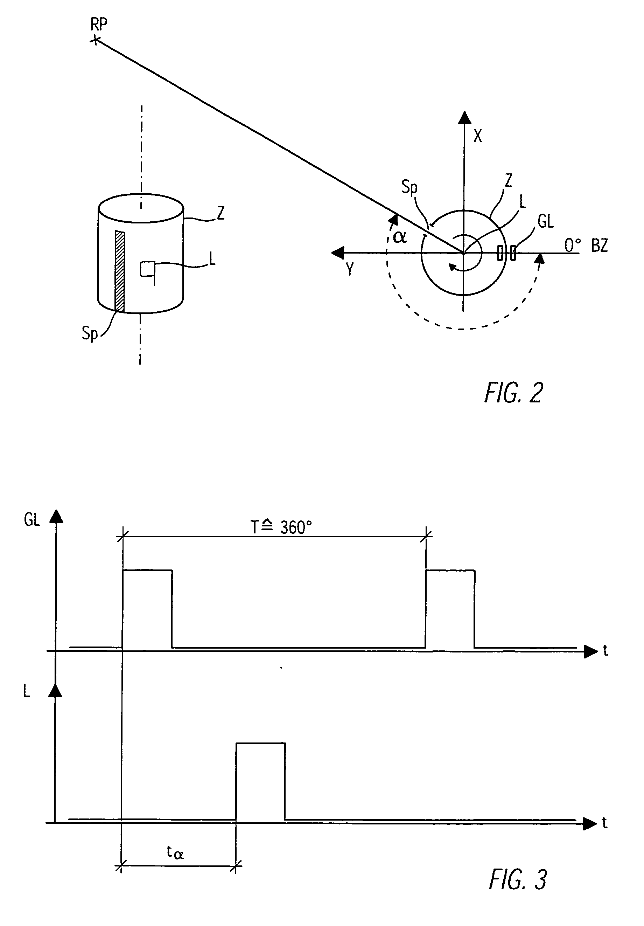

Fig. 2 zeigt schematisch eine Seitenansicht sowie Aufsicht auf ein bevorzugtes Ausführungsbeispiel eines in der erfindungsgemäßen Vorrichtung verwendeten Lichtdetektors. Dieser Lichtdetektor umfaßt ein Lichterfassungsmittel L (beispielsweise eine Photodiode, Infrarot-Empfangsdiode) oder dgl., das nicht ortsauflösend sein muß. Dieses Lichterfassungsmittel L ist zentral innerhalb eines im wesentlichen hohlen Zylinders Z angeordnet, der einen Spalte Sp aufweist, die längs seiner zylindrischen Außenwand verläuft. An der zylindrischen Außenwand ist ferner eine Gabellichtschranke GL angeordnet, deren Lichtschranke vom Spalt Sp geöffnet und geschlossen wird. Diese Gabellichtschranke GL liefert beim Durchgang des Spaltes Sp durch ihre Lichtschranke ein Referenzsignal, das beispielsweise im Zeitablaufdiagramm der Fig. 3 dargestellt ist. Dort ist im mit GL bezeichneten Diagrammabschnitt der Zeitverlauf der von der Gabellichtschranke GL gelieferten Meßsignale illustriert. Die Meßsignale haben die Form zweier Rechteckpulse, deren Abstand auch genau einem 360°-Umlauf des Spaltes Sp um das Lichterfassungsmittel L herum entspricht. Dreht sich der Spalt Sp nach seinem Durchlauf durch die Gabellichtschranke GL solange um einen Winkel α weiter, bis der vom Objekt RP ausgestrahlte Lichtstrahl auf das Lichterfassungsmittel L im Zentrum des Hohlzylinders Z fällt, so liefert das entsprechende Lichterfassungsmittel L ein Signal an die Auswerteeinrichtung. Dieses Signal des Lichterfassungsmittels L ist in der Fig. 3 im zeitlichen Verlauf zum von der Gabellichtschranke GL gelieferten Signal dargestellt. Wie aus der Fig. 3 ersichtlich wird, sind die beiden Signale um die Zeit t_{α} versetzt, woraus auf den Winkel α geschlossen werden kann. Hierzu wird der Zylinder Z beispielsweise von einem drehzahlgeregelten Elektromotor angetrieben, der die Drehzahl des Zylinders Z konstant hält. Der zeitliche Abstand T zweier aufeinanderfolgender Meßsignale der Gabellichtschranke GL entspricht einem Winkel α von 360°. Wird nunmehr der zeitliche Versatz t_{α} zwischen dem vom Lichterfassungsmittel L gemessenen Signal und dem von der Gabellichtschranke gemessenen Signal GL zum zeitlichen Abstand T gesetzt und mit dem Winkel 360° multipliziert, kann daraus unmittelbar der Winkel α bestimmt werden. In den gezeigten Ausführungsbeispielen ist die Längsachse des Zylinders Z parallel zur z-Richtung ausgerichtet. Der Winkel α wird damit in der xy-Ebene gemessen.

Anstelle der Gabellichtschranke kann selbstverständlich irgendein anderer Signalgeber verwendet werden, der einen festen Referenzpunkt für die Drehstellung des Zylinders Z mißt (beispielsweise ein Hallgeber, eine spezielle elektronische Schaltung, die aus dem an den Elektromotor des drehbaren Zylinders Z angelegten Antriebssignal direkt die Drehstellung des Zylinders Z liefert, etc.).

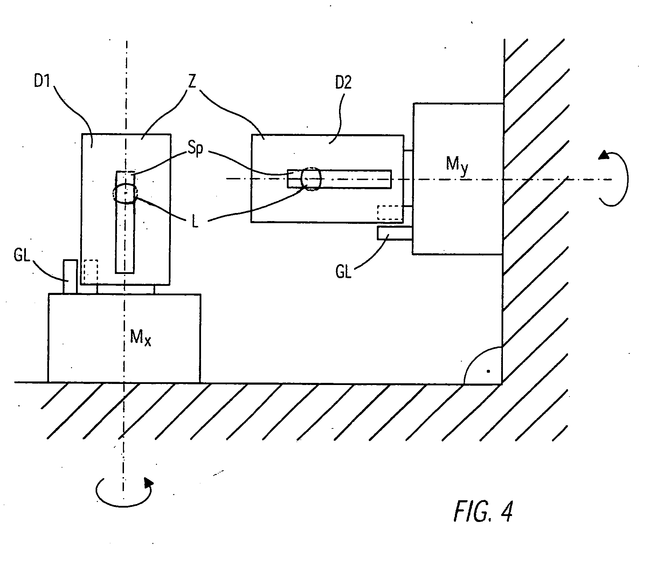

Wird nunmehr eine weitere Lichtdetektoreinheit D2, wie in der schematischen Seitenansicht der Fig. 4 näher dargestellt, senkrecht zum ersten Lichtdetektor D1 angeordnet, so messen die beiden Lichtdetektoreinheiten D1 und D2 auch zwei senkrecht zueinander stehende Winkel. In der Fig. 4 mißt der Lichtdetekor D1 beispielsweise einen in der yz-Ebene liegenden Winkel, da sein Zylinder Z entlang der x-Achse ausgerichtet ist, und der Lichtdetektor D2 einen Winkel in der xz-Ebene, da die Längsachse seines Zylinders Z in y-Richtung ausgerichtet ist. Zwei solche Lichtdetektoren D1 und D2 können nunmehr eine Lichtdetektoreinheit E1 bilden, welche beispielsweise den Azimutwinkel α₁ und den Elevationswinkel e₁ messen. Entsprechend kann ein solches Paar an Lichtdetektoreinheiten D1 und D2 auch die zweite Lichtdetektoreinheit E2 bilden, wobei die Winkel der Lichtdetektoren D1 und D2 der zweiten Lichtdetektoreinheit E2 wie diejenigen der ersten Lichtdetektoreinheit E1 ausgerichtet sein können. In der Alternative mit nur drei Lichtdetektoren kann die zweite Lichtdetektoreinheit E2 beispielsweise nur einen solchen Lichtdetektor D1 oder D2 umfassen. In der Fig. 4 sind noch die zwei getrennten Antriebsmotoren Mx und My (z.B. Elektromotoren, etc.) für die beiden drehbaren Zylinder Z gezeigt. Selbstverständlich kann auch nur ein Antriebsmotor für beide Zylinder Z verwendet werden, der diese über ein entsprechendes Getriebe antreibt.

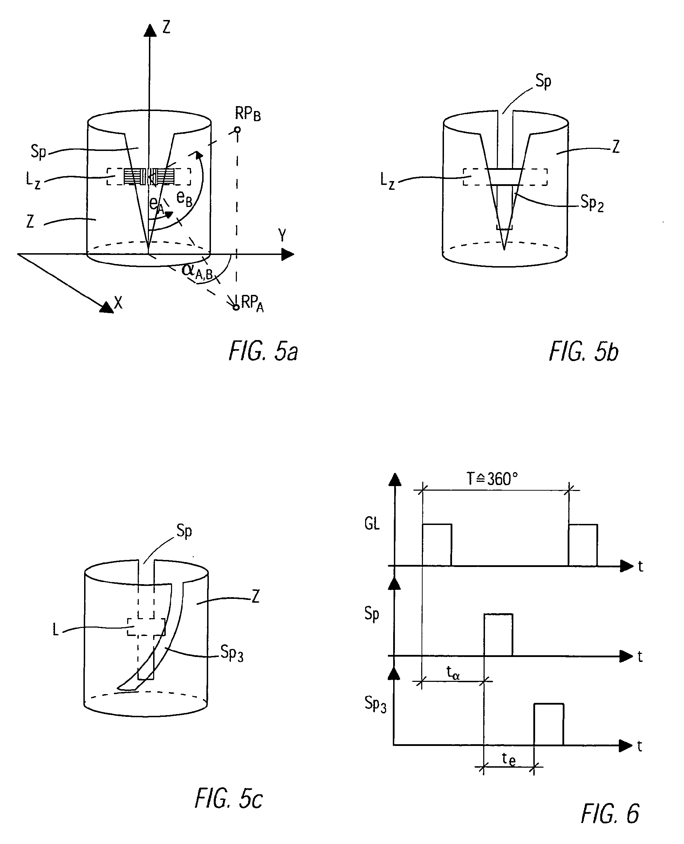

Fig. 5 zeigt in schematischer Seitenansicht ein alternatives Ausführungsbeispiel für eine Lichtdetektoreinheit E1 oder E2. Bei diesem Ausführungsbeispiel variiert die Breite des Spaltes Sp längs der zylindrischen Außenwand des Hohlzylinders Z. An einem oberen Ende ist die Spaltbreite am größten und verjüngt sich linear (V-förmig) zum unteren Ende des Spaltes Sp hin. Im Zentrum des Hohlzylinders Z ist ein ortsauflösendes Lichterfassungsmittel L_{Z} angeordnet. Das ortsauflösende Lichterfassungsmittel L_{Z} kann eine CCD-Zeile sein, die sich in Radialrichtung des Hohlzylinders Z erstreckt und zentral im Inneren des Hohlzylinders Z angeordnet ist. Diese Ausgestaltung wird nachfolgend als Lichterfassungszeile L_{Z} bezeichnet. Je nach Elevationswinkel e variiert also die vom Objekt RP auf die Lichterfassungszeile L_{Z} fallende Lichtpunktbreite. Im Beispiel der Fig. 5 sind zwei solche Elevationswinkel e_{A} und e_{B} zu Illustrationszwecken dargestellt, welche Objekten RP_{A} und RP_{B} entsprechen. Fällt das Licht vom Objekt RP_{A} durch den Spalt Sₚ auf die Lichterfassungszeile L_{Z}, so ist der dort auffallende Lichtfleck gerade so breit, wie durch das vertikal gestrichelte Feld dargestellt. Das Lichtfeld fällt nämlich durch einen engeren Spaltabschnitt der V-förmigen Spalte Sp. Wenn das Licht vom Objekt RP_{B} auf die Lichterfassungszeile L_{Z} trifft, ist der dort erzeugte Lichtfleck so groß, wie durch die vertikal und horizontal gestrichelten Felder auf der Lichterfassungszeile L_{Z} dargestellt ist. Das Licht fällt nämlich in diesem Fall durch einen breiteren Spaltabschnitt der V-förmigen Spalte Sp. Eine Messung des Azimutwinkels α_{A,B} erfolgt beispielsweise dann, wenn der Lichtfleck - in Radialrichtung gesehen - zentral auf die Lichterfassungszeile L_{Z} trifft. Liegt das Zentrum des Lichtfleckes neben dem Zentrum der Lichterfassungszeile L_{Z}, so ist die Mitte des symmetrisch ausgebildeten Spaltes Sp noch nicht in Richtung des Objektes RP_{A,B} ausgerichtet.

Anstelle einer solchen Zentrumsbestimmung des Lichtpunktes kann auch alternativ ein Zylinder mit zwei Spalten Sp und Sp₂ verwendet werden, wie er in der schematischen Seitenansicht der Fig. 5b gezeigt ist. Die Spaltenbreite der Spalte Sp ist hierbei konstant, während die Spaltenbreite des Spaltes Sp₂ wie im Ausführungsbeispiel der Fig. 5a linear von einem Ende zum anderen Ende ab- bzw. zunimmt. Der Spalt Sp wird hierbei zur Messung des Azimutwinkels α_{A,B} verwendet. Sein Meßsignal wird darüber hinaus zur Auslösung der Messung des Elevationswinkels e_{A,B} mit Hilfe des Spaltes Sp₂ verwendet. Da die Drehgeschwindigkeit des Hohlzylinders Z bekannt ist, kann nach einer halben Umdrehung des Hohlzylinders Z, nachdem das Licht durch die Spalte Sp auf die Lichterfassungszeile L_{Z} gefallen ist, eine erneute Messung der Breite des nunmehr zentral durch den Spalt Sp₂ einfallenden Lichtfleckes durchgeführt werden. In diesem Fall muß keine Zentrumslage des Lichtflekkes auf der Lichterfassungszeile L_{Z} sichergestellt werden, da diese Zentrierung durch die Triggerung dieser Messung mit der Messung des durch den ersten Spalte Sp hervorgerufenen Lichtsignals sichergestellt wird.

Bevorzugt wird alternativ zur ortsaufgelösten Pulsbreitenmessung des empfangenen Lichtsignals eine zeitliche Pulsbreitenmessung durchgeführt. Hierzu bestimmt die Auswerteeinrichtung die Pulsdauer des gemessenen Lichtsignals. Da der gesamte Lichtfleck ja von seiner einen Kante bis zu seiner anderen Kante (für das Objekt RP_{A} die linke und rechte Kante des vertikal gestrichelten Feldes und für das Objekt RP_{B} die linke und rechte Kante des horizontal gestrichelten Feldes) über das "Zentrum" des Lichterfassungsmittels läuft, ist die Pulsdauer bei gleicher Drehgeschwindigkeit der Blende unterschiedlich groß und ein Maß für den Elevationswinkel e_{A,B}. Das Lichterfassungsmittel ist bei dieser Alternative bevorzugt nicht mehr ortsauflösend.

Selbstverständlich können anstelle des in den Fig. 5a und 5b dargestellten V-förmigen Spaltes Sp auch andere Spaltformen verwendet werden, die eine eindeutige Zuordnung des auf eine Lichterfassungszeile L_{Z} oder ein nichtortsauflösendes Lichterfassungsmittel projizierten Lichtfleckes zum zugehörigen Elevationswinkel erlauben. Anstelle einer linearen Zu- bzw. Abnahme der Spaltenbreite kann auch eine nicht-lineare Zu- bzw. Abnahme vorgesehen werden, um beispielsweise eine lineare Abhängigkeit der erfaßten Lichtfleckbreite bzw. Pulsdauer vom Elevationswinkel e_{A,B} zu erhalten.

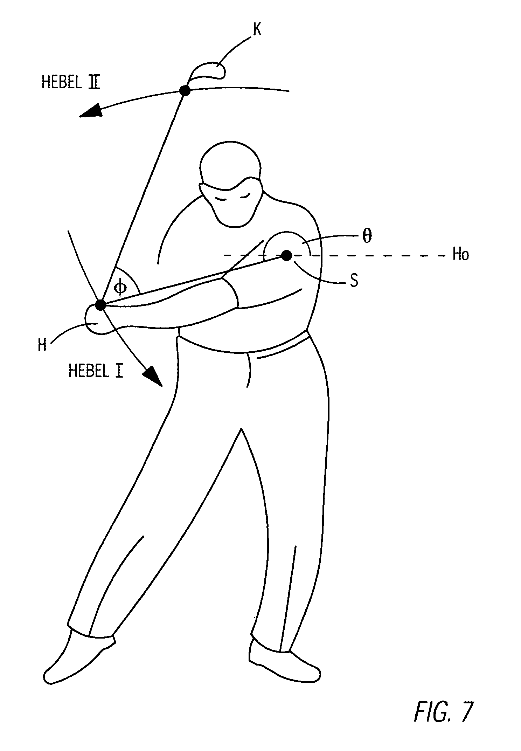

Fig. 5c zeigt ein weiteres Ausführungsbeispiel für einen Lichtdetektor, der gleichzeitig einen Azimutwinkel α und einen Elevationswinkel e messen kann. Hierzu ist an der zylindrischen Außenwand des Hohlzylinders Z ein Spalt Sp mit konstanter Spaltenbreite vorgesehen, zu dem ein weiterer Spalt Sp₃ örtlich versetzt angeordnet ist. Aus Gründen der einfacheren Darstellung ist in der Fig. 5c dieser Spalt Sp₃ dem Spalt Sp gegenüberliegend dargestellt. Es wird jedoch bevorzugt, daß die beiden Spalten Sp₃ und Sp möglichst nah beieinander liegen. Der Spalt Sp₃ verläuft nicht parallel zur Längsachse des Hohlzylinders Z. Beispielsweise kann er schräg zur Längsachse verlaufen, so daß der Spalt Sp₃ eine Spiralform über die zylindrische Außenfläche des Hohlzylinders Z ausführt. Mit dem Spalt Sp wird wiederum der Azimutwinkel α bestimmt, wie dies im Zeitablaufdiagramm der Fig. 6 dargestellt ist. Der Azimutwinkel α ergibt sich aus dem Zeitversatz t_{α} zu einem entsprechenden Signal der in Fig. 5c nicht näher dargestellten Gabellichtschranke GL. Das zweite auf das nichtortsauflösende (punktförmige) Lichterfassungsmittel L fallende Lichtsignal wird zur Messung des Elevationswinkel e herangezogen. So kann der Elevationswinkel e aus dem zeitlichen Versatz des dem ersten Spalt Sp zugeordneten Lichtsignals und des dem zweiten Spalt Sp₃ zugeordneten Lichtsignals ermittelt werden. Selbstverständlich ist hier wiederum jede Form des Spalte Sp₃ denkbar, die eine eindeutige Zuordnung des gemessenen Zeitversatzes tₑ zum Elevationswinkel e ermöglicht. Wiederum kann der Verlauf des Spalts Sp₃ so gewählt werden, daß der gemessene Zeitversatz tₑ linear vom Elevationswinkel e abhängt.

Gemäß weiterer, in der Zeichnung nicht näher dargestellten Ausführungsbeispiele kann der Hohlzylinder Z auch zwei, drei oder mehrere Spalten aufweisen, die in Umfangsrichtung gleichmäßig über die zylindrische Außenwand des Hohlzylinders Z verteilt sind. Bei zwei solcher gegenüberliegender Spalten kann der Hohlzylinder Z im Vergleich zu einem Hohlzylinder mit nur einem Spalt konstanter Breite mit der halben Drehgeschwindigkeit angetrieben werden, und hat trotzdem die gleiche zeitliche Auflösungsrate, jedoch auf Kosten eines halbierten Detektionsraums (es können nur Objekte RP "vor" einem solchen Detektor erfaßt werden, nicht jedoch "hinter" diesem). Im Falle eines Hohlzylinders Z mit nur einer Spalte Sp konstanter Breite können nämlich zwei Lichterfassungszellen L verwendet werden, deren Detektionsflächen nach "vorne" und nach "hinten" zeigen. Mit einem solchen Detektor wäre die Positionsbestimmung im gesamten Raum möglich. Wenn der Lichtdetektor so eingesetzt wird, daß er immer in einem bestimmten Mindestabstand vom Objekt RP entfernt ist, können auch drei oder mehrere Spalten vorgesehen werden, wobei sich der Winkelbereich für die Positionsbestimmung entsprechend verringert (bei drei Spalten kann nur ein Winkelbereich von 120° "vor" dem Detektor erfaßt werden, etc.).

Selbstverständlich können all die vorstehend am Beispiel der mechanisch rotierenden Blende beschriebenen Ausführungsbeispiele alternativ auch mit der elektronisch rotierenden Blende (z.B. LCD-Schicht, etc.) realisiert werden.

Fig. 7 zeigt nunmehr ein spezielles Anwendungsbeispiel einer solchen erfindungsgemäßen Vorrichtung zur Bestimmung der Position von mehreren Objekten im Raum. In dem gezeigten Anwendungsbeispiel soll die Bewegung eines Golfspielers analysiert werden. Hierzu sind am Schlägerkopf K ein frequenzselektiver Reflektor (oder eine auf einer ersten Frequenz ausstrahlende Lichtquelle), an der Führungshand H des Golfspielers ein zweiter frequenzselektiver Reflektor (oder eine zweite Lichtquelle, die Licht auf einer zweiten, von der ersten unterschiedlichen Frequenz ausstrahlt) und an der Schulter S ein dritter frequenzselektiver Reflektor (oder eine dritte Lichtquelle, die Licht auf einer dritten, von der ersten und der zweiten unterschiedlichen Frequenz ausstrahlt) angebracht. Solche frequenzselektiven Reflektoren können beispielsweise einfach durch Farbfilter realisiert werden, die z.B. einfallendes weißes Licht in der entsprechenden Farbe des Farbfilters reflektieren. Als Lichtquellen können beispielsweise Leuchtdioden mit unterschiedlicher Frequenz eingesetzt werden. Die Lichtdetektoreinheiten E1 und E2 können nunmehr so ausgebildet sein, daß deren Lichterfassungsmittel L frequenzselektiv sind. Bei einem ersten Umlauf des Hohlzylinders H kann das Lichterfassungsmittel L nur Licht der ersten Frequenz empfangen, beim darauffolgenden Umlauf nur Licht der zweiten Frequenz und bei einem darauffolgenden Umlauf nur Licht der dritten Frequenz. Anschließend empfängt es wieder Licht der ersten Frequenz. Wenn der Hohlzylinder Z drei Spalten Sp aufweist, kann die Frequenzselektivität auch innerhalb eines Drittel des Umlaufes des Hohlzylinders Z gewechselt werden. Somit können nacheinander die Positionen des Schlägerkopfes H, der Hand H und der Schulter S ermittelt werden. Diese gemessenen Positionen können zeitlich verfolgt und entsprechend Analysen der Schwungbahn (Hebel II) des Schlägerkopfes K, insbesondere des Winkel φ zwischen Schläger und Arm des Golfspielers und der Schulterwinkel θ des Golfspielers bezüglich der horizontalen Ho, wie auch die Schwungbahn (Hebel I) der Schwunghand H des Golfspielers analysiert werden. Alternativ können die Lichtdetektoren E1 und E2 auch nicht-frequenzselektiv ausgestaltet sein. In diesem Fall muß die Auswerteeinrichtung ausgehend von einer z.B. manuell eingegebenen Startposition des Schlägerkopfes K, der Schwunghand H und der Schulter S die Positionen dieser Objekte zeitlich verfolgen. Wenn die Zeitauflösung genügend groß ist, ist ein erstes Kriterium für die Zuordnung einer neu gemessenen Position zu einer der mehreren zeitlich verfolgten Trajektorien deren räumliche Nähe zu einer dieser Trajektorien und ein zweites Kriterium deren Lage bezüglich der Richtung dieser Trajektorien, die aus den zuletzt ermittelten Position abgeleitet wird. Für weitere Zuordnungsmethoden gemessener Positionen zu mehreren bekannten Trajektorien wird auf die einschlägige Literatur verwiesen.

Alternativ zur frequenzselektiven Unterscheidung (FDM = "frequency division multiplexing") können die Lichtquellen auch über ein zeitliches (TDM = "time division multiplexing") oder ein codiertes (CDM = "code division multiplexing") Multiplexen unterschieden werden. Beim zeitlichen Multiplexen müßte die Auswerteeinrichtung mit den Lichtquellen synchronisiert werden, damit sie zu jedem Zeitpunkt weiß, welche Lichtquelle gerade sendet. Beim codierten Multiplexen muß die Auswerteinrichtung einen Dekodierer umfassen, der aus dem empfangenden Lichtsignal die sendende Lichtquelle dekodiert.

Neben den genannten Anwendungsbeispielen kann die Erfindung auch in der Medizintechnik (z.B. Orthopädie zur Schritt- bzw. Gangsmustervermessung, etc.), der Industrie (z.B. Vermessung der Position eines Kranhakens von Schwerlastkränen, etc.), der Virtual Reality (z.B. für eine Mensch/Maschine-Benutzerschnittstelle in Form eines Datenhandschuhs, etc.) usw. eingesetzt werden. Die Erfindung eignet sich besonders auch für die Positionsbestimmung auf kleinem Maßstab.

## Patentansprüche

1. Verfahren zum quasi-kontinuierlichen Bestimmen der Position eines Objektes (RP) im Raum, bei dem:
- vom Objekt (RP) Licht ausgestrahlt wird,
- von einem ersten Lichtdetektor (E1) ein erster Winkel (α₁) gemessen wird, unter dem das vom Objekt (RP) ausgestrahlte Licht auf den ersten Lichtdetektor (E1) einfällt,
- von einem zweiten Lichtdetektor (E1) ein zweiter Winkel (e₁) gemessen wird, unter dem das vom Objekt (RP) ausgestrahlte Licht auf den zweiten Lichtdetektor (E1) einfällt, wobei der erste Winkel (α₁) senkrecht zum zweiten Winkel (e₁) ist,
- von einem dritten Lichtdetektor (E2) ein dritter Winkel (α₂) gemessen wird, unter dem das vom Objekt (RP) ausgestrahlte Licht auf den dritten Lichtdetektor (E2) einfällt, wobei der dritte Lichtdetektor (E2) an einer unterschiedlichen Position als der zweite und/oder der erste Lichtdetektor (E1) angeordnet ist, und
- die Position des Objektes (RP) im Raum aus dem ersten, zweiten und dritten gemessenen Winkel (α₁, e₁, α₂) sowie der Position des ersten, zweiten und dritten Lichtdetektors (E1,E2) bestimmt wird.

2. Verfahren zum quasi-kontinuierlichen Bestimmen der Position eines Objektes (RP) im Raum, bei dem:
- vom Objekt (RP) Licht ausgestrahlt wird,
- von einem ersten Lichtdetektor (E1) ein erster Winkel (α₁) gemessen wird, unter dem das vom Objekt (RP) ausgestrahlte Licht auf den ersten Lichtdetektor (E1) einfällt,
- von einem zweiten Lichtdetektor (E1) ein zweiter Winkel (e₁) gemessen wird, unter dem das vom Objekt (RP) ausgestrahlte Licht auf den zweiten Lichtdetektor (E1) einfällt, wobei der erste Winkel (α₁) senkrecht zum zweiten Winkel (e₁) ist,
- von einer Entfernungsmeßeinrichtung (E) eine Entfernung (1) zum Objekt (RP) gemessen wird, und
- die Position des Objektes (RP) im Raum aus dem ersten und zweiten gemessenen Winkel (α₁, e₁) und der gemessenen Entfernung (1) sowie der Position des ersten und zweiten Lichtdetektors (E1) und der Entfernungsmeßeinrichtung (E) bestimmt wird.

3. Verfahren nach Anspruch 1, bei dem der erste und der zweite Lichtdetektor (E1) im wesentlichen an der gleichen Position angeordnet sind, und aus dem ersten und dem zweiten gemessenen Winkel (α₁, e₁) ein erster Richtungsvektor bestimmt wird, aus der Position des dritten Lichtdetektors (E2) und dem dritten gemessenen Winkel (α₂) eine Meßebene im Raum bestimmt wird, und die Position des Objektes (RP) im Raum aus dem Schnittpunkt des ersten Richtungsvektors mit der Meßebene bestimmt wird.

4. Verfahren nach Anspruch 1, bei dem von einem vierten Lichtdetektor (E2) ein vierter Winkel (e₂) gemessen wird, unter dem das vom Objekt (RP) ausgestrahlte Licht auf den vierten Lichtdetektor (E2) einfällt, wobei der vierte Winkel (e₂) senkrecht zum dritten Winkel (α₂) ist, und aus dem ersten und dem zweiten gemessenen Winkel (α₁, e₁) ein erster Richtungsvektor bestimmt wird, und aus dem dritten und dem vierten gemessenen Winkel (α₂, e₂) ein zweiter Richtungsvektor bestimmt wird, und die Position des Objektes (RP) im Raum aus dem Schnittpunkt des ersten Richtungsvektors mit dem zweiten Richtungsvektor bestimmt wird.

5. Verfahren nach einem der vorhergehenden Ansprüche, bei dem das Licht vom Objekt (RP) auf einer objektspezifischen Frequenz, in einem objektspezifischen Zeitfenster und/oder mit einer objektspezifischen Codierung ausgestrahlt wird, und das Licht von den Lichtdetektoren (E1,E2) frequenz-, zeit- bzw. codeselektiv detektiert wird.

6. Verfahren nach einem der vorhergehenden Ansprüche, bei dem das Licht von einem am ersten, zweiten, dritten und/oder vierten Lichtdetektor (E1, E2) angeordneten Lichterzeugungsmittel ausgestrahlt und von einem am Objekt angebrachten Reflektor zu den Lichtdetektoren (E1, E2) reflektiert wird.

7. Verfahren nach einem der vorhergehenden Ansprüche, bei dem der erste, zweite, dritte und/oder vierte Lichtdetektor (E1,E2) ein Lichterfassungsmittel (L) und eine drehbar um das Lichterfassungsmittel (L) angeordnete Blende (Z,Sp) umfaßt, deren Drehachse senkrecht auf einer den ersten, zweiten, dritten bzw. vierten Winkel (α₁, e₁, α₂, e₂) enthaltenden Ebene steht, und bei dem die Blende (Z,Sp) um das Lichterfassungsmittel (L) herum gedreht und ihre Winkellage erfaßt wird, und der erste, zweite, dritte und/oder vierte Winkel (α₁, e₁, α₂, e₂) aus der momentanen Winkellage der Blende (Z,Sp) bestimmt wird, bei der das vom Objekt (RP) stammende Licht auf das Lichterfassungsmittel (L) einfällt.

8. Verfahren nach Anspruch 7, bei dem die Öffnungsbreite der Blende (Z, Sp₁) längs der Richtung des zweiten und/oder vierten Winkels (e₁, e₂) derart variiert, daß
- in Längsrichtung der Blendenöffnung gesehen - jeder Öffnungsabschnitt eine unterschiedliche Öffnungsbreite aufweist, bei dem die Breite des auf das Lichterfassungsmittel (L_{z}) einfallenden Lichtstrahls erfaßt wird und der zweite und/oder vierte Winkel (e₁, e₂) aus der Breite des erfaßten Lichtstrahles bestimmt wird.

9. Verfahren nach Anspruch 7, bei dem eine zweite Blende (Z,Sp₂) drehbar um das Lichterfassungsmittel (L) angeordnet ist, deren Drehachse ebenfalls senkrecht auf der den ersten, zweiten, dritten bzw. vierten Winkel (α₁, e₁, α₂, e₂) enthaltenden Ebene steht, wobei die Position der zweiten Blende (Z,Sp₂) in Drehrichtung zur ersten Blende (Z,Sp) derart variiert, daß - in Längsrichtung der zweiten Blende (Z, Sp₂) gesehen - jeder Blendenabschnitt der zweiten Blende (Z, Sp₂) in Drehrichtung unterschiedlich weit von einem entsprechenden Blendenabschnitt der ersten Blende (Z,Sp) entfernt ist, bei dem die erste und die zweite Blende (Z, Sp, Sp₂) zusammen um das Lichterfassungsmittel (L) herum gedreht werden und der zweite und/oder vierte Winkel (e₁, e₂) aus dem zeitlichen Versatz der beiden vom Lichterfassungsmittel (L) erfaßten Lichtsignale bestimmt wird, die dem Einfall des vom Objekt stammenden Lichtes durch die erste (Z,Sp) und die zweite Blende (Z,Sp₂) entsprechen.

10. Verfahren nach einem der vorhergehenden Ansprüche, bei dem die Positionen mehrerer Objekte (K,H,S) simultan bestimmt werden, indem von diesen Objekten (K,H,S) jeweils Licht ausgestrahlt wird und die bestimmten Positionen den einzelnen Objekten (K,H,S) zugeordnet werden, indem vorzugsweise die zeitlichen Verläufe der Positionen jedes Objektes (K,H,S) verfolgt werden und die aktuell bestimmten Positionen auf der Grundlage der verfolgten zeitlichen Verläufe zugeordnet werden.

11. Vorrichtung zum quasi-kontinuierlichen Bestimmen der Position eines Objektes (RP) im Raum, mit:
- einem am Objekt (RP) angebrachten Leuchtmittel zum Aussenden von Licht in den Raum,
- einem ersten Lichtdetektor (E1) zum Messen eines ersten Winkels (α₁), unter dem das vom Leuchtmittel ausgestrahlte Licht auf den ersten Lichtdetektor (E1) einfällt,
- einem zweiten Lichtdetektor (E1) zum Messen eines zweiten Winkels (e₁), unter dem das vom Leuchtmittel ausgestrahlte Licht auf den zweiten Lichtdetektor (E1) einfällt, wobei der erste Winkel (α₁) senkrecht zum zweiten Winkel (e₁) ist,
- einem dritten Lichtdetektor (E2) zum Messen eines dritten Winkels (α₂), unter dem das vom Leuchtmittel ausgestrahlte Licht auf den dritten Lichtdetektor (E2) einfällt, wobei der dritte Lichtdetektor (E2) an einer unterschiedlichen Position als der erste und/oder der zweite Lichtdetektor (E1) angeordnet ist, und
- einer mit dem ersten, zweiten und dritten Lichtdetektor (E1,E2) gekoppelten Auswerteeinrichtung zum Bestimmen der Position des Objektes (RP) im Raum anhand des ersten, zweiten und dritten gemessenen Winkels (α₁, e₁, α₂) sowie der Position des ersten, zweiten und dritten Lichtdetektors (E1, E2).

12. Vorrichtung zum quasi-kontinuierlichen Bestimmen der Position eines Objektes (RP) im Raum, mit:
- einem am Objekt (RP) angebrachten Leuchtmittel zum Aussenden von Licht in den Raum,
- einem ersten Lichtdetektor (E1) zum Messen eines ersten Winkels (α₁), unter dem das vom Leuchtmittel ausgestrahlte Licht auf den ersten Lichtdetektor (E1) einfällt,
- einem zweiten Lichtdetektor (E1) zum Messen eines zweiten Winkels (e₁), unter dem das vom Leuchtmittel ausgestrahlte Licht auf den zweiten Lichtdetektor (E1) einfällt, wobei der erste Winkel (α₁) senkrecht zum zweiten Winkel (e₁) ist,
- einer Entfernungsmeßeinrichtung (E) zum Messen der Entfernung (1) von dieser Einrichtung zum Objekt (RP), und
- einer mit dem ersten und zweiten Lichtdetektor (E1) sowie der Entfernungsmeßeinrichtung (E) gekoppelten Auswerteeinrichtung zum Bestimmen der Position des Objektes (RP) im Raum anhand des ersten und zweiten gemessenen Winkels (α₁, e₁) und der gemessenen Entfernung (1) sowie der Position des ersten und zweiten Lichtdetektors (E1) und der Entfernungsmeßeinrichtung (E).

13. Vorrichtung nach Anspruch 11, bei welcher der erste und der zweite Lichtdetektor (E1) im wesentlichen an der gleichen Position angeordnet sind und die Auswerteeinrichtung derart eingerichtet ist, daß sie aus dem ersten und dem zweiten Winkel (α₁, e₁) einen ersten Richtungsvektor bestimmt, aus der Position des dritten Lichtdetektors (E2) und dem dritten gemessenen Winkel (α₂) eine erste Meßebene im Raum, und aus dem Schnittpunkt des ersten Richtungsvektors mit der ersten Meßebene die Position des Objektes (RP) im Raum.

14. Vorrichtung nach Anspruch 11, bei der ein vierter Lichtdetektor (E2) zum Messen eines vierten Winkels (e₂) vorgesehen ist, unter dem das vom Leuchtmittel ausgestrahlte Licht auf den vierten Lichtdetektor (E2) einfällt, wobei der vierte Winkel (e₂) senkrecht zum dritten Winkel (α₂) ist, und die Auswerteeinrichtung derart eingerichtet ist, daß sie aus dem ersten und dem zweiten gemessenen Winkel (α₁, e₁) einen ersten Richtungsvektor bestimmt, aus dem dritten und dem vierten gemessenen Winkel (α₂, e₂) einen zweiten Richtungsvektor, und aus dem Schnittpunkt des ersten Richtungsvektors mit dem zweiten Richtungsvektor die Position des Objektes (RP) im Raum.

15. Vorrichtung nach einem der Ansprüche 11 bis 14, bei der das Leuchtmittel Licht mit einer objektspezifischen Frequenz, in einem objektspezifischen Zeitfenster und/oder mit einer objektspezifischen Codierung ausstrahlt, und der erste, zweite, dritte und/oder vierte Lichtdetektor (E1,E2) frequenz-, zeit- bzw. codeselektiv ausgestaltet sind.

16. Vorrichtung nach einem der Ansprüche 11 bis 15, bei der das Leuchtmittel ein Reflektor ist.

17. Vorrichtung nach Anspruch 16, bei welcher der Reflektor ein Retro-Reflektor ist, und ein lichterzeugendes Mittel jeweils am ersten, zweiten, dritten und/oder vierten Lichtdetektor (E1,E2) angeordnet ist.

18. Vorrichtung nach einem der Ansprüche 11 bis 17, bei welcher der erste, zweite, dritte und/oder vierte Lichtdetektor (E1, E2) ein Lichterfassungsmittel (L) und eine drehbar um das Lichterfassungsmittel (L) angeordnete Blende (Z,Sp) umfaßt, deren Drehachse senkrecht auf einer den ersten, zweiten, dritten bzw. vierten Winkel (α₁, e₁, α₂, e₂) enthaltenden Ebene steht, wobei ein mit der Auswerteeinrichtung gekoppeltes Winkellagebestimmungsmittel (GL) zum Bestimmen der Winkellage der Blende (Z,Sp) bezüglich der Ebene vorgesehen ist, und die Auswerteeinrichtung derart eingerichtet ist, daß sie den ersten und/oder dritten Winkel (α₁, α₂) aus der momentanen Winkellage der Blende (Z,Sp) bestimmt, bei der das vom Objekt (RP) stammende Licht auf das Lichterfassungsmittel (L) einfällt.

19. Vorrichtung nach einem der Ansprüche 11 bis 18, bei welcher der erste und der zweite Lichtdetektor (E1) eine erste an einer ersten Position angeordnete Lichtdetektoreinheit (E1) bilden, welche den ersten und den zweiten Winkel (α₁, e₁) mißt, wobei der erste Winkel (α₁) senkrecht zum zweiten Winkel (e₁) ist.

20. Vorrichtung nach einem der Ansprüche 14 bis 19, bei welcher der dritte und der vierte Lichtdetektor (e2) eine zweite, an einer zweiten Position angeordnete Lichtdetektoreinheit (E2) bilden, welche den dritten und den vierten Winkel (α₂, e₂) mißt, wobei der dritte Winkel (α₂) senkrecht zum vierten Winkel (e₂) ist, und die erste und die zweite Position verschieden sind.

21. Vorrichtung nach einem der Ansprüche 18 bis 20, bei der die Blende (Z,Sp) ein koaxial zum Lichterfassungsmittel (L) angeordneter Hohlzylinder (Z) mit Spalte (Sp) ist, und die Spalte (Sp) längs der zylindrischen Außenwand des Hohlzylinders (Z) verläuft.

22. Vorrichtung nach Anspruch 21, bei der ein zweiter längs der zylindrischen Außenwand des Hohlzylinders (Z) verlaufender Spalt (Sp₁) vorgesehen ist, der zum ersten Spalt (Sp) örtlich versetzt angeordnet ist.

23. Vorrichtung nach Anspruch 21 oder 22, bei der die Spaltenbreite des ersten und/oder zweiten Spaltes (Sp, Sp₁) in Längsrichtung derart variiert, daß - in Längsrichtung des Spaltes (Sp, Sp₁) gesehen - jeder Spaltabschnitt eine unterschiedliche Spaltenbreite aufweist, wobei die Auswerteeinrichtung derart eingerichtet ist, daß sie den zweiten und/oder vierten Winkel (e₁,e₂) aus der Pulsdauer des auf das Lichterfassungsmittel (L_{z}) einfallenden Lichtstrahles bestimmt.

24. Vorrichtung nach Anspruch 23, bei der die Spaltenbreite in Längsrichtung linear von einem Spaltende zum anderen variiert.

25. Vorrichtung nach einem der Ansprüche 22 bis 24, bei der die Position des zweiten Spaltes (Sp₂) in Umfangsrichtung der zylindrischen Außenwand derart variiert, daß - in Längsrichtung des Spaltes (Sp₂) gesehen - jeder Spaltabschnitt des zweiten Spaltes (Sp₂) in Drehrichtung unterschiedlich weit von einem entsprechenden Spaltabschnitt des ersten Spaltes (Sp) entfernt ist, wobei die Auswerteeinrichtung derart eingerichtet ist, daß sie den zweiten und/oder vierten Winkel (e₁, e₂) aus dem zeitlichen Versatz der beiden vom Lichterfassungsmittel (L) erfaßten Lichtsignale bestimmt, die dem Einfall des vom Objekt (RP) stammenden Lichtes durch den ersten und den zweiten Spalt (Sp,Sp₂) entsprechen.

26. Vorrichtung nach Anspruch 25, bei welcher der zweite Spalt (Sp₂) im wesentlichen spiralförmig an der zylindrischen Außenwand verläuft.

27. Vorrichtung nach einem der Ansprüche 21 bis 26, bei welcher der Hohlzylinder (Z) n Spalten umfaßt, die im wesentlichen um 360°/n in Umfangsrichtung versetzt, längs der Außenwand verlaufen, wobei n eine positive ganze Zahl größer als eins ist.

28. Vorrichtung nach einem der Ansprüche 18 bis 27, bei der die Blende (Z,Sp) von einem drehzahlgeregelten Elektromotor (Mx,My) angetrieben wird.

29. Vorrichtung nach einem der Ansprüche 21 bis 28, bei der das Winkellagebestimmungsmittel (GL) eine Gabellichtschranke ist, die mit dem Spalt (Sp) zusammenarbeitet.

30. Vorrichtung nach einem der Ansprüche 18 bis 27, bei der die Blende (Z,Sp) elektronisch realisiert ist.
